# EUROPÄISCHE PATENTSCHRIFT

(11) **EP 3 464 913 B1**
(45) Veröffentlichungstag und Bekanntmachung des Hinweises auf die Patenterteilung: **05.06.2024**
(21) Anmeldenummer: 17716180.9
(22) Anmeldetag: 05.04.2017
(51) Int. Cl.: B25B 13/56, F16B 37/14, G01L 19/00

(54) **KOMBINATION EINES SCHLÜSSELWEITENADAPTERS MIT EINEM IN EINE GEWINDEÖFFNUNG EINSCHRAUBBAREN BAUTEIL**
COMBINATION OF A WRENCH WIDTH ADAPTER WITH A COMPONENT WHICH CAN BE SCREWED INTO A THREADED OPENING
COMBINAISON D'UN ADAPTATEUR D'OUVERTURE DE CLÉ AVEC UN ÉLÉMENT POUVANT ÊTRE INTRODUIT PAR VISSAGE DANS UNE OUVERTURE FILETÉE

(30) Priorität: 31.05.2016 DE 102016209479
(43) Veröffentlichungstag der Anmeldung: 10.04.2019
(73) Patentinhaber: Robert Bosch GmbH, 70442 Stuttgart (DE)
(72) Erfinder: PANHOELZL, Bernhard, 71384 Weinstadt (DE)
(86) Internationale Anmeldenummer: PCT/EP2017/058113
(87) Internationale Veröffentlichungsnummer: WO 2017/207140

(56) Entgegenhaltungen:
- WO-A1-2004/001362
- WO-A1-2009/039583
- WO-A1-2015/197276
- CN-U- 204 387 062
- JP-A- H0 749 274
- US-A- 3 027 790
- US-A1- 2011 290 084

## Beschreibung

### Stand der Technik

Im Stand der Technik ist eine erhebliche Anzahl von in eine Gewindeöffnung einschraubbaren Bauteilen bekannt, die zu diesem Zweck einen Gewindestutzen und einen sich daran in der Längsachse des Bauteils anschließenden Bauteilgrundkörper aufweisen, dessen Außenumfang in einer Querschnittsebene senkrecht zu der Längsachse zumindest teilweise die Form eines regelmäßiges Vielecks entsprechend einem gewünschten Schlüsselweitenmaß aufweist. Das einfachste Beispiel für derartige Bauteile sind gewöhnliche Sechskant-Schrauben. Unter einem Schlüsselweitenmaß wird dabei wie auch im Kontext der vorliegenden Anmeldung das Abstandmaß zweier paralleler Flächen eines regelmäßigen Vielecks verstanden, das zur Übertragung eines Drehmoments mittels eines formschlüssigen Werkzeugs dient. Zugehörige Toleranzen für Innen- und Außenteile, also beispielsweise Toleranzen zwischen einem Gabelschlüssel und einem Schraubenkopf sind in entsprechenden Normen erfasst. Bei einer gewöhnlichen Sechskant-Schraube oder Schraubenmutter mit Sechskantaußenfläche wird also das Schlüsselweitenmaß durch den Abstand zweier voneinander abgewandter und sich in Bezug auf die Schraubenachse diametral gegenüberliegender Teilflächen des Sechskants definiert.

Ein besonderes Beispiel von in einer Gewindeöffnung einschraubbaren Bauteilen sind Drucksensoren in der Kraftfahrzeugtechnik. Derartige Drucksensoren weisen einen Gewindestutzen auf, der in eine Druckmessöffnung des Kraftfahrzeuges, beispielsweise einen Zylinder der Brennkraftmaschine oder eine Hochdruckleitung eines Kraftstoffeinspritzsystems einschraubbar ist. An den Gewindestutzen schließt sich in einer Längsachse des Drucksensors gesehen ein Sensorgrundkörper an, dessen Außenumfang in einer Querschnittsebene senkrecht zu der Längsachse zumindest teilweise die Form eines regelmäßiges Vielecks entsprechend einem gewünschten Schlüsselweitenmaß aufweist. Sehr oft bildet der Außenumfang einen Sechskant. Weiterhin schließt sich in der Längsachse des Drucksensors gesehen an den Sensorgrundkörper ein elektrisches Steckerteil für den Anschluss des Drucksensors an beispielsweise ein Steuergerät an. Ein derartiger Drucksensor ist beispielsweise aus der EP 1 518 099 B1 bekannt. Ein weiterer Drucksensor ist aus JPH0749274 bekannt.

Die bekannten Drucksensoren werden mittels eines Schraubwerkzeug, beispielsweise einer Stecknuss, die über den Sechskant aufgezogen wird, in die Gewindeöffnung eingeschraubt. Dabei muss die Stecknuss über das Steckerteil geführt werden können, um an den Sechskant des Sensorgrundkörpers formschlüssig angelegt werden zu können. Das Schlüsselweitenmaß dieses Sechskants kann aber nicht stark verkleinert werden, da dann das zum Einschrauben benötigte Werkzeug nicht mehr in jedem Fall über das Steckerteil gezogen werden kann. Dadurch werden die Freiheiten zur Gestaltung und Miniaturisierung des Drucksensors sowie der Einbauort des Drucksensors eingeschränkt.

US3027790A offenbart einen Schlüsselweitenadapter gemäß dem Stand der Technik.

### Offenbarung der Erfindung

Die Erfindung betrifft eine Kombination eines Schlüsselweitenadapters mit einem in eine Gewindeöffnung einschraubbaren Bauteil, und schlägt vor, einen speziellen Schlüsselweitenadapter zum Einschrauben eines in eine Gewindeöffnung einschraubbaren Bauteils zu verwenden, der am Bauteil verbleiben kann. Die Erfindung ist in Anspruch 1 definiert.

### Vorteile der Erfindung

Durch den erfindungsgemäßen Schlüsselweitenadapter wird vorteilhaft erreicht, dass in Gewindeöffnungen einschraubbare Bauteile einerseits mit beliebig kleinen Schlüsselweiten ausgestaltet werden können und andererseits dennoch optional mit den bisher verwandten Schraubwerkzeugen eingeschraubt werden können. Dies kann ganz einfach erreicht werden, indem die Bauteile in den Schlüsselweitenadapter eingesetzt werden. Die Innenwandung des Schlüsselweitenadapters weist ein ersten Schlüsselweitenmaß auf, das dem Schlüsselweitenmaß eines Außenumfangs des Bauteilgrundkörpers entspricht, so dass der Schlüsselweitenadapter beim Einführen des Bauteils formschlüssig mit dem Außenumfang des Bauteilgrundkörpers in Eingriff gelangt. Weiterhin weist der Schlüsselweitenadapter auf seiner Außenwandung ein zweites Schlüsselweitenmaß auf, das beispielsweise vorteilhaft den bisher verwandten Schraubwerkzeugen entsprechen kann. Der Schlüsselweitenadapter bietet vorteilhaft eine Vielzahl an Möglichkeiten, die Außenwandung mit einer völlig anderen Geometrie als die an das vorgegebene Bauteil angepasste Innenwandung auszugestalten. So können beispielsweise gegebenenfalls auch zusätzliche Maßnahmen wie Arretierungsmittel oder ein Demontageschutz in den Schlüsselweitenadapter integriert werden, die nicht an dem Bauteil ausgebildet werden können.

Vorteilhafte Ausführungsformen und Weiterbildungen der Erfindung werden durch die in den abhängigen Ansprüchen beschriebenen Merkmale ermöglicht.

Erfindungsgemäß weist der Schlüsselweitenadapter einen Grundköper auf, an dem wenigstens ein in die Innenausnehmung ragender Vorsprung ausgebildet ist. Der wenigsten eine in die Innenausnehmung ragende Vorsprung bildet eine zu der Längsachse senkrecht oder schräg angeordnete Anschlagfläche für das Bauteil beim Einführen des Bauteils in die Innenausnehmung.

Dadurch wird vorteilhaft verhindert, dass das Bauteil durch die Innenausnehmung hindurchrutschen kann. Außerdem wird vorteilhaft erreicht, dass der Schlüsselweitenadapter beim Einschrauben des Bauteils in die dem Bauteil zugeordnete Gewindeöffnung zwischen dem Bauteilgrundkörper und einer die Gewindeöffnung umgebenden Gegenfläche eingespannt werden kann und daher nicht verlorengehen kann.

Erfindungsgemäß ist an dem Grundkörper des Schlüsselweitenadapters wenigstens ein Befestigungsmittel zur Befestigung des Grundkörpers an dem Bauteil ausgebildet.

Das wenigstens eine Befestigungsmittel weist in Richtung der Längsachse gesehen an der von dem wenigstens einem Vorsprung abgewandten Seite des Grundkörpers eine von dem Grundkörper in Richtung der Innenausnehmung vorspringende Nase auf.

Dadurch lässt sich das Bauteil vorteilhaft zwischen dem Vorsprung und der Nase einspannen, so dass der Schlüsselweitenadapter an dem Bauteil arretiert ist. Vorteilhaft kann das wenigstens eine Befestigungsmittel als Rastmittel, Verstemmlasche oder verstemmter Wandabschnitt ausgebildet sein. Eine Rastnase des Rastmittels hintergreift dann automatisch beim Einführen des Bauteils in die Innenausnehmung des Schlüsselweitenadapters einen Vorsprung oder eine Stützfläche des Bauteils. Ist das Befestigungsmittel als Verstemmlasche ausgebildet, wird die Lasche nach Einführen des Bauteils umgebogen und hintergreift mit einer vorspringenden Nase eine Stützfläche an dem Bauteil. Weiterhin ist es möglich, wenigstens einen Wandabschnitt des Grundkörpers so auszugestalten, dass dieser in Richtung der Innenausnehmung verstemmt werden kann.

Erfindungsgemäß weist der Grundkörper des Schlüsselweitenadapters eine sich in der Längsachse erstreckende umlaufende Wand auf, deren Innenseite die Innenwandung bildet und deren Außenseite die Außenwandung bildet. Zusätzlich oder alternativ weist der Grundköper eine zur der Längsachse senkrechte und vorzugsweise einstückig mit der Wand ausgebildete ringförmige Bodenplatte auf, welche in die Innenausnehmung hinein ragt und dadurch den wenigstens einen Vorsprung ausbildet. Die Bodenplatte dient vorteilhaft zur sicheren Auflage des Schlüsselweitenadapters an eine Gegenfläche in welcher die Gewindeöffnung für das wenigstens eine Bauteil vorgesehen ist. Der Grundkörper des Schlüsselweitenadapters kann einfach und preiswert aus Kunststoff oder Metall hergestellt sein.

Die Erfindung betrifft eine Kombination des Schlüsselweitenadapters mit einem in eine Gewindeöffnung einschraubbaren Bauteil, welches einen Gewindestutzen und einen sich daran in der Längsachse des Bauteils anschließenden Bauteilgrundkörper aufweist, dessen Außenumfang in einer Querschnittsebene senkrecht zu der Längsachse zumindest teilweise die Form eines regelmäßiges Vielecks entsprechend dem ersten Schlüsselweitenmaß aufweist. Das Bauteil ist vorteilhaft in die Aufnahme derart eingeschoben ist, dass der Gewindestutzen durch die Innenausnehmung hindurchgeführt ist und von dem Grundkörper des Schlüsseladapters in Richtung der Längsachse nach außen aus dem Grundkörper herausragt. Die Baugruppe aus Schlüsselweitenadapter und Bauteil kann vorteilhaft im Verbund geliefert montiert werden.

Ohne darauf beschränkt zu sein, ist als ein in eine Gewindeöffnung einschraubbares Bauteil vorzugsweise ein Sensor, insbesondere ein Drucksensor vorgesehen. Vorzugsweise wird durch den Schlüsselweitenadapter die Verwendung von Sensorstreckerteilen ermöglicht, die im Durchmesser senkrecht zur Längsachse des Sensors größer sind als das Schlüsselweitenmaß des Sensorgrundkörpers. Eine zum Einschrauben des Sensors verwandte Stecknuss, die in diesem Fall nicht mehr an dem Außenumfang des Sensorgrundkörpers zu Anlage gelangen kann, kann dann vorteilhaft an der Außenwandung des Schlüsselweitenadapters formschlüssig zur Anlage gelangen.

### Kurze Beschreibung der Zeichnungen

Es zeigen:
Fig. 1 einen Drucksensor nach dem Stand der Technik,
Fig. 2a ein erstes Ausführungsbeispiel des erfindungsgemäßen Schlüsselweitenadapters,
Fig. 2b den Schlüsselweitenadapter aus Fig. 2a in einem an einem Drucksensor festgelegten Zustand,
Fig. 3a ein zweites Ausführungsbeispiel des erfindungsgemäßen Schlüsselweitenadapters,
Fig. 3b den Schlüsselweitenadapter aus Fig. 3a in einem an einem Drucksensor festgelegten Zustand,
Fig. 4 die Montage eine erfindungsgemäßen Schlüsselweitenadapters an einem Drucksensor,
Fig. 5a und Fig. 5b Schlüsselweitenadapter, die an Drucksensoren mit unterschiedlichen Steckerteilen angeordnet sind,
Fig. 6a ein drittes Ausführungsbeispiel des erfindungsgemäßen Schlüsselweitenadapters in einem an einem Drucksensor festgelegten Zustand,
Fig. 6b eine vergrößerte Detailansicht für den Ausschnitt I aus Fig. 6a.

### Ausführungsformen der Erfindung

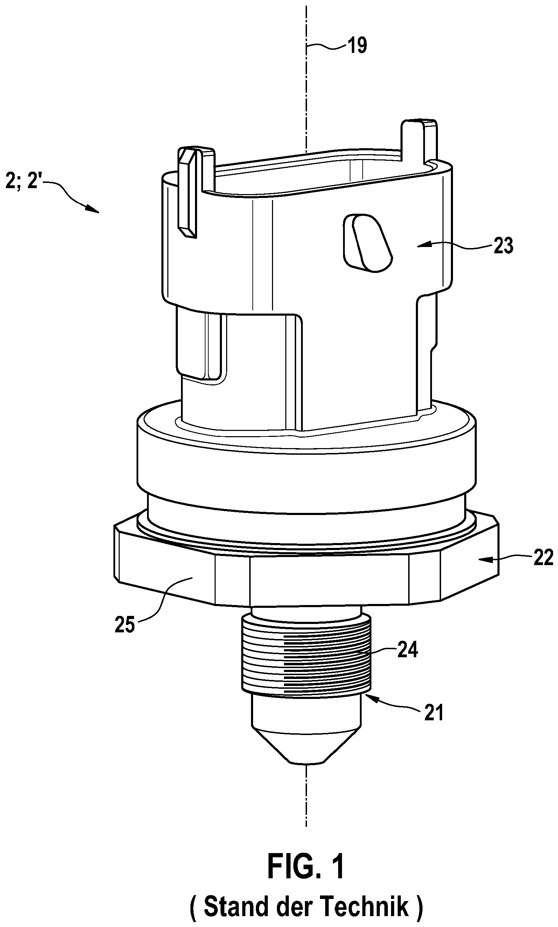

Fig. 1 zeigt einen aus dem Stand der Technik bekannten Drucksensor 2', wie er beispielsweise aus der EP 1 518 099 B1 bekannt ist. Der bekannte Drucksensor 2' weist einen Bauteilgrundkörper 22 beziehungsweise Sensorgrundkörper auf, dessen Außenumfang in einer Querschnittsebene senkrecht zu einer Längsachse 19 des Drucksensors 2' die Form eine regelmäßigen Vielecks aufweist. Im vorliegenden Beispiel bildet das Vieleck beispielsweise einen Sechskant 25. Der Sechskant 25 weist ein erstes Schlüsselweitenmaß S1 auf. An der Unterseite des Bauteilgrundkörper 22 steht eine Gewindestutzen 21 von dem Bauteilgrundkörper 22 ab. Der rotationsymmetrisch zu der Längsachse 19 aufgebaute Gewindestutzen 21 weist an einem Außenumfang ein Schraubgewinde 24 auf. Der Gewindestutzen 21 dient dazu, den Drucksensor in eine nicht dargestellte Druckmessöffnung einzuschrauben. Ein den Gewindestutzen 21 zentrisch durchdringender, in Fig. 1 nicht erkennbarer Druckkanal verbindet die Druckmessöffnung mit einem Sensorelement im Inneren des Bauteilgrundkörpers 22. Zum elektrischen Anschluss des Drucksensors 2' dient ein auf der von dem Gewindestutzen 21 abgewandten Seite des Bauteilgrundkörpers 22 an diesem angeordnetes Steckerteil 23. Für Einzelheiten des Aufbaus des Drucksensors wird beispielsweise auf den in der EP 1 518 099 B1 offenbarten Drucksensor verwiesen.

Der in Fig. 1 dargestellte Drucksensor 2' ist aber nur ein Beispiel für ein in eine Gewindeöffnung einschraubbares Bauteil 2. Grundsätzlich ist der noch zu beschreibende erfindungsgemäße Schlüsselweitenadapter jedoch nicht nur für die dargestellten Drucksensoren, sondern auch für beliebige andere, in eine Gewindeöffnung einschraubbare Bauteile vorgesehen, die einen Gewindestutzen und einen sich daran in der Längsachse anschließenden Bauteilgrundkörper aufweisen, dessen Außenumfang in einer Querschnittsebene senkrecht zu der Längsachse zumindest teilweise die Form eines regelmäßiges Vielecks aufweist. Beispielsweise kann das einschraubbare Bauteil auch eine Sechskant-Schraube sein. Der Drucksensor dient hier nur als ein Beispiel für ein solches Bauteil.

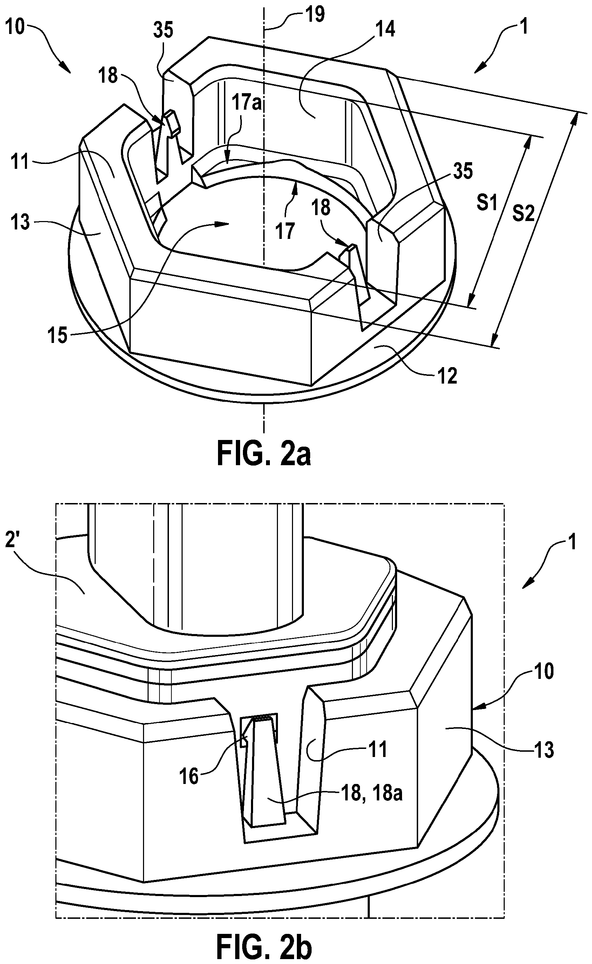

Ein Ausführungsbeispiel des erfindungsgemäßen Schlüsselweitenadapters 1 ist in Fig. 2a dargestellt. Der Schlüsselweitenadapter 1 weist einen zu einer Längsachse 19 rotationssymmetrisch aufgebauten Grundkörper 10 auf, der vorzugsweise einstückig aus Kunststoff oder Metall gefertigt ist. Im Kontext der vorliegenden Anmeldung wird unter einem zu einer vorgegebenen Achse rotationssymmetrisch ausgebildeten Bauteil, ein Bauteil verstanden, dessen äußere Form für einen ortsfesten Betrachter durch Drehung des Bauteils um die vorgegebene Achse um einen Drehwinkel von 180° oder weniger in die gleiche Form überführbar ist. Das heißt, bei einer Drehung um beispielsweise 180° besteht für einen ortsfesten Betrachter kein Unterschied in der äußeren Form des Bauteils zur Ausgangssituation. So kann beispielsweise die äußere Form eines quaderförmigen Bauteils durch Drehung um 180° um eine zu den Seitenflächen senkreche Achse des quaderförmigen Bauteils wieder in sich selbst überführt werden. Ein Zylinder kann natürlich um einen beliebig kleinen Winkel um seine Hauptsymmetrieachse gedreht werden, ohne seine äußere Form zu ändern. All diese Bauteile sind daher rotationssymmetrisch um die genannten Achsen aufgebaut.

Der Grundkörper 10 weist eine sich in einer Längsachse 19 erstreckende umlaufende Wand 11 auf, deren Innenseite eine Innenwandung 14 aufweist und deren Außenseite eine Außenwandung 13 aufweist. Die Innenwandung 14 begrenzt eine sich entlang der Längsachse 19 erstreckende durchgehende Innenausnehmung 15, welcher der Aufnahme des einschraubbaren Bauteils 2 dient.

Wie in Fig. 2a zu erkennen ist, weist die Innenwandung 14 des Grundkörpers 10 zumindest teilweise in einer Querschnittsebene senkrecht zu der Längsachse 19 die Form eines regelmäßiges Vielecks entsprechend einem ersten Schlüsselweitenmaß S1 auf. Das regelmäßige Vieleck ist im vorliegenden Ausführungsbeispiel ein Sechseck, kann aber auch ein Achteck oder Fünfeck oder ein Quadrat oder ein anderes regelmäßiges Vieleck sein. Weiterhin weist der Grundköper 10 eine zur der Längsachse 19 senkrechte und einstückig an die umlaufende Wand 11 angeformte, im Wesentlichen ringförmige Bodenplatte 12 auf. Diese Bodenplatte 12 steht am unteren Rand des Grundköpers 10 seitlich von der Wand 11 ab und bildet derart einen kleinen Flansch. An der Unterseite des Grundkörpers 10 ragt die Bodenplatte 12 etwas in die Innenausnehmung 15 hinein und bildet dadurch wenigstens einen Vorsprung 17 mit einer zu der Längsachse 19 beispielsweise schräg oder senkrecht angeordneten Anschlagfläche 17a für das Bauteil 2. Die Außenwandung 13 des Grundkörpers 10 in Fig. 2a weist zumindest teilweise die Form eines regelmäßiges Vielecks entsprechend einem zweiten Schlüsselweitenmaß S2 auf, das größer als das erste Schlüsselweitenmaß S1 ist.

Weiterhin können Befestigungsmittel 18 an dem Schlüsselweitenadapter 1 vorgesehen sein. Wie in Fig. 2a zu erkennen ist, weist die umlaufende Wand 11 beispielsweise zwei Aussparungen 35 auf, die sich etwa ausgehend von der Bodenplatte 12 parallel zu der Längsachse 19 bis zur Oberseite des Grundkörpers 10 und der Wand 11 erstrecken. In diesen Aussparungen 35 ist jeweils ein biegeelastischer Steg angeordnet, der ein Rastmittel 18a ausbildet und dessen Ende eine von dem Grundkörper 10 in Richtung der Innenausnehmung 15 vorspringende Nase 16 aufweist. Vorzugsweise können zwei Befestigungsmittel 18 vorgesehen sein, die sich in Bezug auf die Längsachse 19 beispielsweise diametral gegenüberliegen. Es besteht aber auch die Möglichkeit, nur ein Befestigungsmittel oder mehr als zwei Befestigungsmittel vorzusehen.

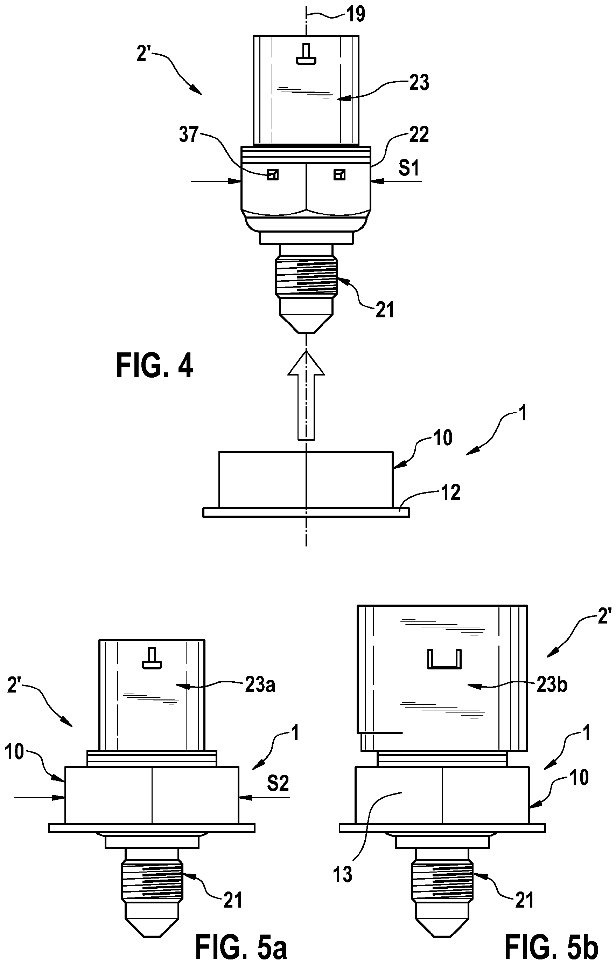

Die Montage des Schlüsselweitenadapters 1 an einem als Bauteil 2 verwandten Drucksensor 2' ist in Fig. 4 dargestellt. Die Längsachse 19 des Schlüsselweitenadapters 1 fällt mit der Längsachse 19 des Drucksensors 2' zusammen. Der Schlüsselweitenadapter 1 wird in Richtung der Längsachse 19 über den Gewindestutzen 21 geschoben, bis der Bauteilgrundkörper 22 des Drucksensors 2' in die Innenausnehmung 15 eindringt und an der Anschlagfläche 17a zur Anlage gelangt. Wie am besten in Fig. 5a zu erkennen ist, steht in der Endposition der Gewindestutzen 21 auf der Unterseite des Schlüsselweitenadapters 1 aus diesem hervor und die Nasen 16 der Rastmittel 18b greifen in entsprechende Nuten oder Ausnehmungen 37 an dem Bauteilgrundkörper 22 ein, wie in Fig. 2b dargestellt ist, so dass der Schlüsselweitenadapter 1 an dem Drucksensor 2' befestigt ist. Dabei wird der Bauteilgrundkörper 22 vorzugsweise zwischen der an der Unterseite des Schlüsselweitenadapters 1 angeordneten Anschlagfläche 17a und den an der Oberseite des Schlüsselweitenadapters 1 angeordneten Nasen 16 der Rastmittel 18a eingespannt.

Bei der Montage des Schlüsselweitenadapters 1 wird der Bauteilgrundkörper 22 in die Innenausnehmung 15 eingeführt. Dabei greift der Außenumfang des Bauteilgrundkörpers 22 formschlüssig in die Innenwandung 14 ein. Dies ist möglich, wenn der Außenumfang des Bauteilgrundkörpers 22 und die Innenwandung 14 des Schlüsselweitenadapters 1 dem gleichen Schlüsselweitenmaß S1 entsprechen. Das heißt, dass der Bauteilgrundkörper 22 einen Außenumfang aufweist, der in einer Querschnittsebene senkrecht zu der Längsachse 19 die Form eines regelmäßiges Vielecks entsprechend dem ersten Schlüsselweitenmaß S1 aufweist, und dass die Innenwandung 14 des Grundkörpers 10 in der Querschnittsebene senkrecht zu der Längsachse 19 die gleiche Form eines regelmäßiges Vielecks entsprechend dem ersten Schlüsselweitenmaß S1 aufweist. Im Kontext der vorliegenden Anmeldung weist die Innenwandung 14 des Grundkörpers 10 in der Querschnittsebene senkrecht zu der Längsachse 19 die Form eines regelmäßiges Vielecks entsprechend einem ersten Schlüsselweitenmaß S1 des Bauteilgrundkörpers 22 auch dann auf, wenn die Innenausnehmung 15 toleranzbedingt etwa größer dimensioniert werden muss als der Außenumfang des Bauteilgrundkörpers 22, damit das Bauteil 2 in die Innenausnehmung 15 noch problemlos eingeschoben werden kann. Gegebenenfalls kann die umlaufende Wand 11 auch eine gewisse Elastizität aufweisen, um ein Einschieben des Bauteils 2 in die Innenausnehmung 15 zu erleichtern.

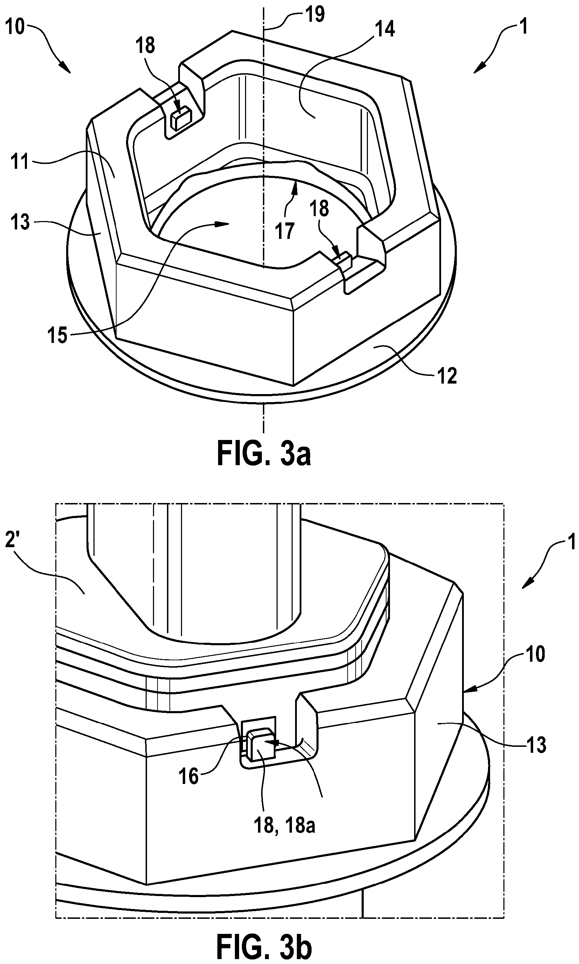

Fig. 3a und 3b zeigt ein weiteres Ausführungsbeispiel des erfindungsgemäßen Schlüsselweitenadapters 1. Im Unterschied zu dem Ausführungsbeispiel in Fig. 2a und 2b sind hier die Befestigungsmittel 18 als Biegelasche 18b ausgebildet, welche nach dem Einführen des Bauteils 2 in die Innenausnehmung 15 des Schlüsselweitenadapters 1 in Pfeilrichtung von Fig. 3b umgebogen werden, so dass die äußeren Nasen 16 der Biegelaschen von dem Grundkörper 10 in Richtung der Innenausnehmung 15 vorspringen und dadurch in die Ausnehmungen 37 des Bauteilgrundköpers 22 eingreifen können.

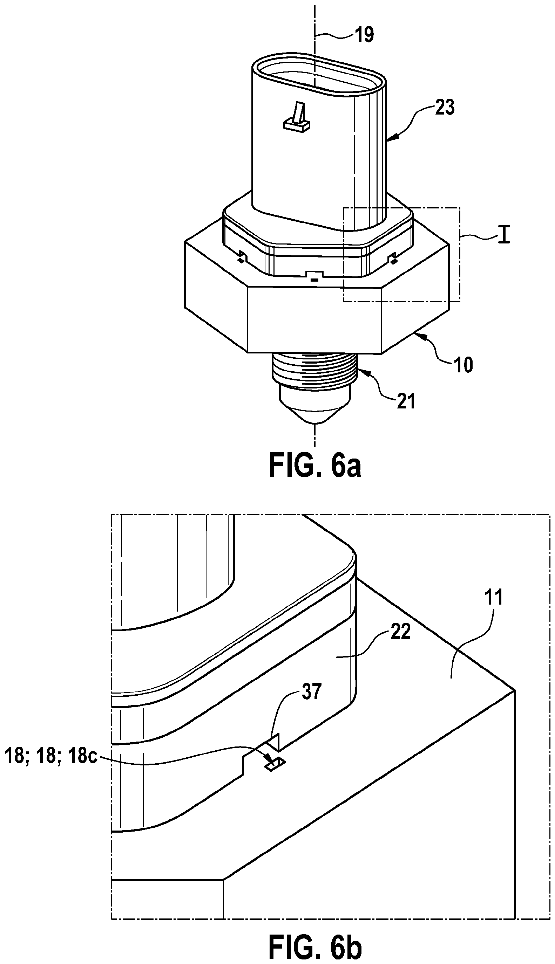

Fig. 6a und 6b zeigen ein drittes Ausführungsbeispiel des erfindungsgemäßen Schlüsselweitenadapters 1. Wie man in Fig. 6a erkennen kann, weist der Schlüsselweitenadapter 1 in diesem Ausführungsbeispiel einen Grundkörper 10 ohne Bodenplatte auf. Die Grundkörper besteht also aus einer sich in der Längsachse 19 erstreckenden umlaufenden Wand 11, deren Innenseite die Innenwandung 14 bildet und deren Außenseite die Außenwandung 13 bildet. Auch in diesem Ausführungsbeispiel kann der Grundköper 10 wenigstens einen in die Innenausnehmung 15 ragenden Vorsprung aufweisen, der in Fig. 6a nicht erkennbar ist und eine Anschlagfläche 17a für das Bauteil 2 bildet. In Fig. 6a und Fig. 6b sind die Befestigungsmittel 18 als verstemmbare Wandabschnitte 18c ausgebildet. Wie in Fig. 6b am besten zu erkennen ist, kann die umlaufende Wand 11 an ihrer Oberseite eine kleine sacklochartige Ausnehmung aufweisen. Ein diese sacklochartige Ausnehmung begrenzender und der Innenwandung 14 zugewandter Wandabschnitt 18c ist recht dünnwandig ausgebildet und kann mittels eines in die sacklochartige Ausnehmung eingeführten Werkzeuges in Richtung der Innenausnehmung 15 verstemmt werden. Dadurch bildet sich ein in Richtung der Innenausnehmung vorspringende Nase 16, welche beispielsweise in eine Ausnehmung 37 des Bauteilgrundkörpers 22 eingreift.

In Fig. 5a und Fig. 5b ist jeweils eine Kombination eines Schlüsselweitenadapters 1 mit einem in eine Gewindeöffnung einschraubbaren Drucksensor 2' dargestellt. Die Drucksensoren 2' unterscheiden sich durch die Außenmaße ihrer jeweiligen Steckerteile. So ist das Steckerteil 23a in Fig. 5a kleiner dimensioniert als das Steckerteil 23b des Drucksensors aus Fig. 5b. In beiden Fällen können die Drucksensoren jedoch mit dem gleichen Werkzeug in die zugeordneten Druckmessöffnungen eingeschraubt werden. Wie man gut in Fig. 5b erkennt, kann eine über das Steckerteil 23b geschobene Stecknuss, welche dem zweiten Schlüsselweitenmaß S2 entspricht, zwar nicht mehr am Außenumfang des Sensorgrundkörpers zur Anlage gelangen, jedoch kann die Stecknuss in die Außenwandung 13 des Schlüsselweitenadapters 1 formschlüssig eingreifen, da der Außendurchmesser der Außenwandung 13 in einer Querschnittsebene senkrecht zu der Längsachse 19 den Außendurchmesser des Steckerteils 23b in Fig. 5b übersteigt.

Ebenso kann diese Stecknuss mit Schlüsselweitenmaß S2 auch zum Einschrauben des Drucksensors in Fig. 5a verwandt werden, wobei dort der gleiche Schlüsselweitenadapter eingesetzt wird. Zwar könnte der Drucksensor in Fig. 5a auch mit einer Stecknuss mit dem Schlüsselweitenmaß S1 direkt eingeschraubt werden, da diese Stecknuss in Fig. 5a über das Steckerteil 23a geschoben werden kann. Diese dem Schlüsselweitenmaß S1 entsprechende Stecknuss könnte aber nicht über das Steckerteil 23b des Drucksensors in Fig. 5b geschoben werden. Erst mittels des Schlüsselweitenadapters 1 ist es nunmehr vorteilhaft möglich, die in Fig. 5a und Fig. 5b zeigten Drucksensoren mit dem gleichen Werkzeug in die zugeordneten Gewindeöffnungen einzuschrauben.

## Patentansprüche

1. Kombination eines Schlüsselweitenadapters (1) mit einem in eine Gewindeöffnung einschraubbaren Bauteil (2), wobei der Schlüsselweitenadapter (1) einen Grundkörper (10) aufweist, der mit einer sich entlang einer Längsachse (19) erstreckenden durchgehenden Innenausnehmung (15) zur Aufnahme des einschraubbaren Bauteils (2) versehen ist, wobei eine die Innenausnehmung (15) begrenzende Innenwandung (14) des Grundkörpers (10) zumindest teilweise in einer Querschnittsebene senkrecht zu der Längsachse (19) die Form eines regelmäßiges Vielecks entsprechend einem ersten Schlüsselweitenmaß (S1) aufweist und wobei eine Außenwandung (13) des Grundkörpers (10) zumindest teilweise die Form eines regelmäßiges Vielecks entsprechend einem zweiten Schlüsselweitenmaß (S2), das größer als das erste Schlüsselweitenmaß (S1) ist, aufweist, wobei der Grundköper (10) wenigstens einen in die Innenausnehmung (15) ragenden Vorsprung (17) aufweist, wobei der wenigstens eine in die Innenausnehmung (15) ragende Vorsprung (17) eine zu der Längsachse (19) senkrecht oder schräg angeordnete Anschlagfläche (17a) für das Bauteil (2) bildet und an dem Grundkörper (10) wenigstens ein Befestigungsmittel (18) zur Befestigung des Grundkörpers (10) an dem Bauteil (2) ausgebildet ist, wobei das wenigstens eine Befestigungsmittel (18) in Richtung der Längsachse (19) an der von dem wenigstens einen Vorsprung (17) abgewandten Seite des Grundkörpers (10) eine von dem Grundkörper (10) in Richtung der Innenausnehmung (15) vorspringende Nase (16) aufweist, wobei der Grundkörper eine sich in der Längsachse (19) erstreckende umlaufende Wand (11) aufweist, deren Innenseite die Innenwandung (14) bildet und deren Außenseite die Außenwandung (13) bildet, und wobei der Grundköper (10) weiterhin eine zur der Längsachse (19) senkrechte und einstückig mit der Wand (11) ausgebildete ringförmige Bodenplatte (12) aufweist, welche in die Innenausnehmung (15) hinein ragt und dadurch den wenigstens einen Vorsprung (17) ausbildet, wobei das in die Gewindeöffnung einschraubbare Bauteil (2) einen Gewindestutzen (21) und einen sich daran in der Längsachse (19) anschließenden Bauteilgrundkörper (22) aufweist, dessen Außenumfang in einer Querschnittsebene senkrecht zu der Längsachse (19) zumindest teilweise die Form eines regelmäßiges Vielecks entsprechend dem ersten Schlüsselweitenmaß (S1) aufweist, und wobei das Bauteil (2) in die Aufnahme (15) eingeschoben ist, so dass der Gewindestutzen (21) von dem Grundkörper (10) des Schlüsselweitenadapters (1) in Richtung der Längsachse (19) nach außen aus dem Grundkörper (10) herausragt, wobei der Gewindestutzen (21) auf der mit der ringförmigen Bodenplatte (12) versehenen Seite des Grundkörpers (10) von dem Grundkörper (10) des Schlüsselweitenadapters (1) hervorsteht.

2. Kombination nach Anspruch 1, **dadurch gekennzeichnet, dass** das wenigstens eine Befestigungsmittel (18) als Rastmittel (18a), Verstemmlasche (18b) oder als verstemmter Wandabschnitt (18c) ausgebildet ist.

3. Kombination nach einem der vorstehenden Ansprüche, **dadurch gekennzeichnet, dass** der Grundkörper (10) aus Kunststoff oder Metall gefertigt ist.

4. Kombination nach einem der vorstehenden Ansprüche, **dadurch gekennzeichnet, dass** das in eine Gewindeöffnung einschraubbare Bauteil (2) ein Sensor, insbesondere ein Drucksensor ist.

## Claims

1. Combination of a width-across-flats adapter (1) with a component (2) that can be screwed into a threaded opening, wherein the width-across-flats adapter (1) has a main body (10), which is provided with a continuous internal recess (15) that extends along a longitudinal axis (19) and is intended to receive the component (2) that can be screwed in, wherein an internal wall (14) of the main body (10), said internal wall delimiting the internal recess (15), at least partially has, in a cross-sectional plane perpendicular to the longitudinal axis (19), the shape of a regular polygon corresponding to a first width across flats (S1), and wherein an external wall (13) of the main body (10) at least partially has the shape of a regular polygon corresponding to a second width across flats (S2) that is larger than the first width across flats (S1), wherein the main body (10) has at least one protrusion (17) that protrudes into the internal recess (15), wherein the at least one protrusion (17) that protrudes into the internal recess (15) forms a stop surface (17a) for the component (2), said stop surface being arranged perpendicular to or obliquely with respect to the longitudinal axis (19), and at least one fastening means (18) for fastening the main body (10) to the component (2) is formed on the main body (10), wherein the at least one fastening means (18) has, in the direction of the longitudinal axis (19), on the side of the main body (10) facing away from the at least one protrusion (17), a lug (16) that protrudes from the main body (10) in the direction of the internal recess (15), wherein the main body has a peripheral wall (11) that extends along the longitudinal axis (19), the internal side of said peripheral wall forming the internal wall (14) and the external side of said peripheral wall forming the external wall (13), and wherein the main body (10) additionally has an annular base plate (12), which is perpendicular to the longitudinal axis (19), formed in one piece with the wall (11), protrudes into the internal recess (15) and, as a result, forms the at least one protrusion (17), wherein the component (2) that can be screwed into the threaded opening has a threaded connector (21) and a component main body (22), which is adjacent thereto along the longitudinal axis (19) and the external periphery of which at least partially has, in a cross-sectional plane perpendicular to the longitudinal axis (19), the shape of a regular polygon corresponding to the first width across flats (S1), and wherein the component (2) is inserted into the receptacle (15) such that the threaded connector (21) protrudes from the main body (10) of the width-across-flats adapter (1) in the direction of the longitudinal axis (19) outwardly out of the main body (10), wherein the threaded connector (21) projects, on the side of the main body (10) that is provided with the annular base plate (12), from the main body (10) of the width-across-flats adapter (1).

2. Combination according to Claim 1, **characterized in that** the at least one fastening means (18) is in the form of a latching means (18a), a securing tab (18b) or a secured wall portion (18c).

3. Combination according to either of the preceding claims, **characterized in that** the main body (10) is manufactured from plastic or metal.

4. Combination according to one of the preceding claims, **characterized in that** the component (2) that can be screwed into a threaded opening is a sensor, in particular a pressure sensor.

## Revendications

1. Combinaison d'un adaptateur (1) de taille de partie de prise avec un élément (2) vissable dans une ouverture filetée, l'adaptateur (1) de taille de partie de prise ayant un corps de base (10) qui présente un évidement intérieur traversant (15) s'étendant le long d'un axe longitudinal (19) de façon à recevoir l'élément vissable (2), une paroi intérieure (14) du corps de base (10) délimitant au moins partiellement l'évidement intérieur (15), et présentant, dans un plan de coupe transversale perpendiculaire à l'axe longitudinal (19), la forme d'un polygone régulier correspondant à une première taille (S1) de partie de prise et une paroi extérieure (13) du corps de base (10) présentant, au moins partiellement, la forme d'un polygone régulier correspondant à une deuxième taille (S2) de partie de prise, qui est supérieure à la première taille (S1) de partie de prise, le corps de base (10) présentant au moins une saillie (17) pénétrant dans l'évidement intérieur (15), ladite au moins une saillie (17) qui pénètre dans l'évidement intérieur (15) formant une surface de butée (17a) pour l'élément (2), disposée perpendiculairement ou obliquement par rapport à l'axe longitudinal (19), et au moins un moyen de fixation (18) étant aménagé sur le corps de base (10) pour la fixation du corps de base (10) à l'élément (2), ledit au moins un moyen de fixation (18) présentant, dans la direction de l'axe longitudinal (19), sur le côté du corps de base (10) opposé à ladite au moins une saillie (17), un ergot (16) faisant saillie du corps de base (10) en direction de l'évidement intérieur (15), le corps de base présentant une paroi périphérique (11) s'étendant selon l'axe longitudinal (19), dont le côté intérieur forme la paroi intérieure (14) et dont le côté extérieur forme la paroi extérieure (13), et le corps de base (10) présentant en outre une plaque de base annulaire (12) perpendiculaire à l'axe longitudinal (19) et formée d'une seule pièce avec la paroi (11), qui fait saillie dans l'évidement intérieur (15) et forme ainsi ladite au moins une saillie (17), l'élément (2) vissable dans l'ouverture filetée présentant une partie filetée (21) et un corps de base (22) d'élément qui lui est adjacent selon l'axe longitudinal (19), dont la périphérie extérieure présente au moins partiellement, selon un plan de coupe perpendiculaire à l'axe longitudinal (19), la forme d'un polygone régulier correspondant à la première taille (S1) de partie de prise, et l'élément (2) étant inséré dans l'évidement (15) de sorte que la partie filetée (21) dépasse vers l'extérieur du corps de base (10) de l'adaptateur (1) de taille de partie de prise dans la direction de l'axe longitudinal (19), la partie filetée (21) dépassant du corps de base (10) de l'adaptateur (1) de taille de partie de prise sur le côté du corps de base (10) pourvu de la plaque de base annulaire (12).

2. Combinaison selon la revendication 1, **caractérisée en ce que** ledit au moins un moyen de fixation (18) est conçu sous la forme d'un moyen d'encliquetage (18a), d'une languette de coincement (18b) ou d'une portion de paroi de coincement (18c).

3. Combinaison selon l'une des revendications précédentes, **caractérisée en ce que** le corps de base (10) est fabriqué en matière plastique ou en métal.

4. Combinaison selon l'une des revendications précédentes, **caractérisée en ce que** l'élément (2) vissable dans un orifice fileté est un capteur, en particulier un capteur de pression.
